# EUROPEAN PATENT SPECIFICATION

(11) **EP 1 582 553 B1**
(45) Date of publication and mention of the grant of the patent: **03.09.2014**
(21) Application number: 03768378.6
(22) Date of filing: 26.12.2003
(51) Int. Cl.: C08J 5/04, B29C 43/18, B29C 70/06, C08L 87/00

(54) **METHOD FOR PRODUCING FIBER-REINFORCED THERMOPLASTIC PLASTIC AND FIBER-REINFORCED THERMOPLASTIC PLASTIC**
HERSTELLUNGSVERFAHREN FÜR FASERVERSTÄRKTEN THERMOPLASTISCHEN KUNSTSTOFF UND FASERVERSTÄRKTER THERMOPLASTISCHER KUNSTSTOFF
PROCEDE DE PRODUCTION DE PLASTIQUE THERMOPLASTIQUE RENFORCE PAR DES FIBRES ET PLASTIQUE THERMOPLASTIQUE RENFORCE PAR DES FIBRES

(30) Priority: 27.12.2002 JP 2002381587
(43) Date of publication of application: 05.10.2005
(73) Proprietor: NITTO BOSEKI CO., LTD., Fukushima-shi, Fukushima 960-8161 (JP); Nagase ChemteX Corporation, Osaka-shi, Osaka 550-8668 (JP)
(72) Inventor: HIRAYAMA, Norio, Nitto Boseki Co., Ltd., Koriyama-shi, Fukushima 963-8061 (JP); NISHIDA, Hirofumi, Nagase Chemtex Corporation, Tatsuno-shi, Hyogo 679-4124 (JP)
(74) Representative: Vossius & Partner
(86) International application number: PCT/JP2003/017071
(87) International publication number: WO 2004/060981

(56) References cited:
- EP-A1- 0 111 122
- EP-A1- 0 505 139
- EP-A1- 0 548 930
- EP-A2- 0 262 891
- WO-A1-99/01501
- JP-A- 10 251 423
- JP-A- 2000 034 399
- US-A- 5 069 857
- US-A- 5 432 007
- US-A- 5 895 808
- US-A- 6 156 403

## Description

### BACKGROUND OF THE INVENTION

### Field of the Invention

This invention relates to a method of manufacturing a fiber-reinforced thermoplastics, and fiber-reinforced thermoplastics manufactured by the method.

### Related Background of the Invention

EP-A-111 122 refers to a specific process for the continuous production of semi-finished goods which contain fiber-reinforced thermoplastic polyurethanes.

US-A-5,069,857 relates to a certain process for the production of molded articles by deep-drawing a prefabricated polyurethane(urea) part produced from a polyisocyanate polyaddition product having a specific gravity of at least 0.8 g/cm³.

US-A-6,156,403 describes an article which comprises (1) a composite comprising a polyurethane matrix including fibrous or particulate reinforcement, the polyurethane being formed *in situ* about the reinforcement by reaction of polyurethane forming components at a temperature below the melting point of the reinforcement and (2) a polyurethane film bound to at least one surface of the composite, the film being bound to the composite by adhesion to the polyurethane matrix which emerges or is enhanced as the matrix is formed *in situ.*

A fibre-reinforced thermoplastic composite is disclosed in WO 99/01501 which comprises a depolymerizable and repolymerizable polymer resin, and at least 30 percent by volume of reinforcing fibres that are impregnated by the polymer resin and extend through the length of the composite, with the proviso that the composite is more than 100 mm long, and has a single-ply thickness of at least 0.2 mm, wherein the thermoplastic polymer resin contains structural units of formula: 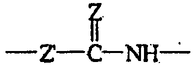 Where Z is S or O; and Z' is S, O, or NH.

JP-A-10-251423 discloses a prepreg for fabrication and a heat-resistant sheet obtained therefrom.

US-A-5,895,808 describes a specific process for producing composite materials which can be thermally postformed and which have a matrix of polylactam produced by means of activated anionic polymerization.

EP-A-505 139 relates to a process for the production of a fibre-reinforced composite material, which comprises the steps of (1) preparing a polymeric composition containing a substantially linear aromatic oligomer having a terminal aliphatic hydroxyl group, bis(acylcaprolactam) and a catalyst which promotes a ring opening-addition reaction of a hydroxyl group and a caprolactam ring, (2) melting the polymeric composition and impregnating it into a fibrous reinforcing material to form a impregnated product, and (3) heating the impregnated product up to a temperature sufficient to open the caprolactam ring while inhibiting elimination of caprolactam thereby to form, as a matrix resin, a thermoplastic copolymer having an ester group and an amide group in its main chain.

JP-A-2000-034399 refers to a thermoplastic elastomer composite material and a sealing material.

A specific solvent-free ternary organosiloxane composition are disclosed in US-A-5,432,007.

EP-A-548 930 discloses a certain method of producing a hot melt resin for use in the production of a prepreg.

EP-A-262 891 relates to a resin composition which contains thermosetting as Component (A), a thermoplastic resin as Component (B), and at least one compound selected from the group consisting of an epoxy resin capable of dissolving the thermoplastic resin and a reactive diluent possessing at least one epoxy group as Component (C) in a ratio such that the proportions of Components (A), (B), and (C) fall respectively in the ranges of 30 to 96 % by weight, 2 to 50% by weight, and 2 to 49 % by weight, based on the total weight of the resin composition.

A fiber-reinforced thermoplastics (FRTP) is a thermoplastics resin which is reinforced by fibers to increase its strength, and since it can be recycled which is difficult with fiber-reinforced thermosetting plastics (FRP) comprising a thermosetting resin reinforced by fibers, it is finding wider applications in recent years. This FRTP is generally manufactured by kneading a thermoplastics resin together with reinforcing fibers (Japan Composite Material Institute, "Composite Material Handbook", Nikkan Kogyo, 20 November, 1989, pages 554-567).

### SUMMARY OF THE INVENTION

However, in the aforesaid prior art, since an FRTP obtained by kneading contains a high molecular weight thermoplastics resin as a binder polymer, when molded products were manufactured, the resin had a high viscosity so that flow properties were poor, and consequently it was not possible to manufacture large molded products or those with complex shapes which required a large amount of material to flow at one time. The heating temperature used during molding can be raised in order to improve the flow properties, but in this case, the thermoplastics resin decomposed or deteriorated due to the fact that the high temperature was maintained for long periods. Also, since the thermoplastics resin is a polymer, when manufacturing an FRTP by kneading together with reinforcing fibers, the thermoplastics resin is not completely impregnated by the reinforcing fibers, so the reinforcing fibers were damaged, and voids occurred at the interfaces between the plastic resin and the reinforcing fibers.

It is therefore an object of the present invention to provide a method of manufacturing a fiber-reinforced thermoplastics which can be applied to the manufacture of various molded products including those with intricate or complex shapes, which does not damage the reinforcing fibers, and which can suppress voids occurring at the interfaces between the thermoplastics and reinforcing fibers to a large extent.

In order to realize the above objects, the present invention provides a method of manufacturing fiber-reinforced thermoplastics, comprising:
a mixing step for mixing an uncured thermosetting resin with reinforcing fibers to obtain a mixture; and
a reaction step for forming a thermoplastics by causing a polymerization reaction of the thermosetting resin in the mixture so that the thermosetting resin polymerizes,
wherein said uncured thermosetting resin comprises a first reactive compound and a second reactive compound, and said polymerization reaction is a polyaddition reaction between said first reactive compound and said second reactive compound, and
wherein said first reactive compound is a bifunctional compound having two epoxy groups, and said second reactive compound is a bifunctional compound having two phenolic hydroxyl groups.

Another embodiment relates to a fiber-reinforced thermoplastics obtainable according to the method of the present invention. In this context, the term "thermoplastic resin" means a reactive compound (comprising 1, 2 or more moeities) having a functional group and a number of functional groups capable of thermosetting which form a thermoplastics (thermoplastic resin) by polymerizing in the reaction step. Specifically, in the reaction step, the "thermosetting resin" mainly produces a linear polymer in the polymerization, but the polymer may partially have three-dimensional crosslinking provided that it maintains thermoplastic properties.

In the manufacturing method of this invention, after the mixture obtained at the mixing step is injected into a mold of desired shape, or laminated by the spray layup method or hand layup method after adjusting the viscosity, and a polymerization reaction is made to occur by heating the whole to form the fiber-reinforced thermoplastics. Hence, molded products having various shapes, including large molded products or those with complex shapes, can be easily manufactured without defects. Also, since the reinforcing fibers are added before the uncured thermoplastic resin is polymerized, the polymerization reaction can proceed after the reinforcing fibers are fully dispersed throughout the uncured thermosetting resin. Therefore, the obtained reinforced thermoplastics contains no damaged reinforcing fibers, and voids occurring at the interfaces between the thermoplastics and reinforcing fibers can be suppressed to a large extent.

### BRIEF DESCRIPTION OF THE DRAWINGS

FIG. 1 is a diagram showing a temperature variation of the storage modulus (E') of a heat melting FRP according to the example.
FIG. 2 is a diagram showing a temperature variation of tan δ of the heat melting FRP according to the example.
FIG 3 is a diagram showing a time variation of weight when the heat melting FRP according to the example and a RefFRP as a comparison X reference were soaked in 10% sulfuric acid.
FIG 4 is a diagram showing a time variation of thickness when the heat melting FRP according to the example and a RefFRP as a comparison reference were soaked in 10% sulfuric acid.
FIG 5 is a diagram showing a time variation of weight when the heat melting FRP according to the example and a RefFRP as a comparison reference were soaked in 10% sodium hydroxide aqueous solution.
FIG 6 is a diagram showing a time variation of thickness when the heat melting FRP according to the example and a RefFRP as a comparison reference were soaked in 10% sodium hydroxide aqueous solution.

### DESCRIPTION OF THE PREFERRED EMBODIMENTS

Hereafter, some aspects of the method of manufacturing a fiber-reinforced thermoplastics and the fiber-reinforced thermoplastics obtained by the manufacturing method according to the invention, will now be described.

The uncured thermoplastic resin used in the method of the invention comprises a first reactive compound and a second reactive compound, the polymerization reaction is a polyaddition reaction of the first reactive compound and the second reactive compound.

The first reactive compound is a bifunctional compound having two epoxy groups, the second reactive comnound is a bifunctional compound having two phenolic hydroxyl groups.

In the reaction step, the polyaddition reaction shown below takes place to give the fiber-reinforced thermoplastics.

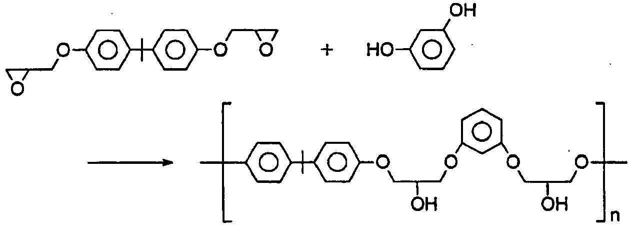

The bifunctional compound having two epoxy groups in the molecule may be for example a mononuclear aromatic diepoxy compound having one benzene ring such as catechol diglycidyl ether, resorcin glycidyl ether and phthalic acid diglycidyl ester, an alicyclic diepoxy compound such as dimethylol cyclohexane diglycidyl ether, Celloxide 2021P (commercial name, Daicell Chemical Industries Ltd.) or limonene dioxide, bisphenol epoxy compounds such as bis(4-hydroxyphenyl)methanediglycidylether, bis(4-hydroxyphenyl)ethanediglycidylether and bis(4-hydroxyphenyl)propanediglycidylether, or partially condensed oligomer mixtures thereof (bisphenol type epoxy resins), tetramethylbis(4-hydroxyphenyl)methanediglycidylether and tetramethylbis(4-hydroxyphenyl)ether di glycidylether. Epoxy resins which exhibit crystallinity when used alone such as biphenyl or tetramethyl biphenyl type epoxy resins, bisphenylfluorene or biscresolfluorene type epoxy resins, or hydroquinone or di-t-butylhydroquinone type epoxy resins, can also be used if diluted to the extent that they do not crystallize.

In order to reduce the temperature at which a re-melting occurs, part of this compound may be substituted by a monofunctional epoxy compound such as a mononuclear aromatic mono-epoxy compound having one benzene ring such as for example p-tert-butylphenylglycidylether or sec-butylphenylglycidylether, preferably within the range of 5-30 wt%.

The bifunctional compound having two phenolic hydroxyl groups in the molecule may be for example a mononuclear aromatic dihydroxy compound having one benzene ring such as for example catechol, a bisphenol such as (4-hydroxyphenyl)propane (bisphenol A), bis(4-hydroxyphenyl)methane (bisphenol F) or bis(4-hydroxyphenyl)ethane (bisphenol AD), a compound having condensed rings such as dihydroxynaphthalene, or a bifunctional phenol compound into which an allyl group has been introduced such as diallyl resorcin, diallyl bisphenol A or triallyl dihydroxybiphenyl. Crystalline compounds such as hydroquinone may be diluted to the extent that they do not crystallize.

To increase adhesive strength, part of the component ingredients may be substituted by a phenolic compound having three or more functional groups such as for example pyrogallol, fluoroglucinol, trinuclear phenol novolak or the formaldehyde condensate of catechol, preferably within the range of 1-20 wt%.

Polymerization catalysts which may be used are phosphorus catalysts, 1,2-alkylenebenzimidazole (TBZ): 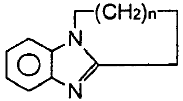 (where n is an integer in the range 2-6, but preferably 3-4), and 2-aryl-4,5-diphenylimidazole (NPZ): 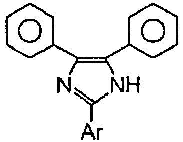 (where Ar is an aryl group, preferably phenyl, tolyl or xylyl). These may be used alone, or two or more may be used together. A phosphorus catalyst can improve reflow properties, and is therefore preferred.

This phosphorus catalyst maybe for example an organophosphorus compound having 3 organic groups, such as for example dicyclohexylphenylphosphine, tri-o-tolylphosphine, tri-m-tolylphosphine, tri-p-tolylphosphine, cyclohexyldiphenylphosphine, triphenylphosphine, triphenylphosphine-triphenylboron complex or tetraphenylphosphonium-tetraphenyl borate. Among these, dicyclohexylphenylphosphine, tri-p-tolylphosphine and triphenylphosphine-triphenyl boron complex are preferred.

The usage amount of the polymer catalyst is normally 0.1-1 parts by weight, more preferably 0.1-0.8 parts by weight and especially preferably 0.2-0.6 parts by weight relative to 100 parts by weight of the first reactive compound from the viewpoint of adhesion/bonding strength and remelting properties.

### (Type 1b)

In the method of manufacturing the fiber-reinforced plastic having thermoplastic properties, reinforcing fibers having aspect ratio of 100 or more (or 1000 or more) as a filament are preferred. A reinforcing fiber knitted web (reinforcing fiber textile, reinforcing fiber knit, reinforcing fiber scrim or reinforcing fiber nonwoven cloth) can also be used. By using reinforcing fibers or reinforcing fiber knitted web having an aspect ratio equal to the above value or more, the degree of reinforcement of the thermoplastic resin can be increased, and a fiber-reinforced thermoplastic resin having superior mechanical properties can be manufactured.

The reinforcing fibers may be for example organic fibers such as carbon fibers or aramide fibers, or inorganic fibers such as glass fibers, but from the viewpoint of easy acquisition and economics, glass fibers are preferred.

The filament diameter of the glass fibers used as the reinforcing fibers is preferably of the order of 3-23 µm, there being no particular limitation on the type of glass fiber, and not only E glass and S glass which are often used as reinforcing fibers, but also C glass and A glass may be used. The cross-section of the glass fiber filaments may be circular, or a non-circular shape such as ellipsoidal or cocoon-shaped.

The glass fibers may be short fibers such as milled glass fibers or chopped strand glass fibers, or long fibers such as glass fiber roving or glass fiber yarn. Glass fiber knitted web such as glass fiber textile, glass fiber scrim, glass fiber knit and glass fiber non-wovencloth, or glass fiber chopped strand mat, may also be used. The glass fiber may also be surface-treated with a surface treatment agent such as a silane coupling agent.

When glass fiber roving is cut, glass fiber strand comprising a bundle of about 50-3000 glass fiber filaments is wound into a cylindrical shape, and the strand is cut into lengths of 6mm-100mm (more preferably, 13mm-50mm) as it is unwound.

Preferred glass fiber textile is the one which is obtained by weaving glass fiber bundles of a 5-500TEX (preferably 22-135TEX) as transverse or longitudinal filaments so as to have the weave density preferably being 16-64 filaments/25mm in the transverse direction and 15-60 filaments/25mm in the longitudinal direction.

In the mixing step, a mixture of the aforesaid uncured thermosetting resin (preferably comprising the first reactive compound and second reactive compound) and reinforcing fibers is prepared. If the reinforcing fibers used do not have the planar structure of fiber-reinforced knitted web, the mixture can be obtained by adding short reinforcing fibers to the uncured thermosetting resin, stirring and mixing. On the other hand, if the reinforcing fibers do have the planar structure of fiber-reinforced braid, in addition to the above method, the uncured thermosetting resin can be coated and impregnated on the glass fiber braid.

The mixture is not particularly limited provided that it contains the uncured thermosetting resin and reinforcing fibers as essential ingredients, and may also contain other additives if desired such as an organic solvent, reaction accelerator, coupling agent, pigment, wettability adjusting agent and antifoaming agent.

If the reinforcing fibers are glass fibers, the ratio of uncured thermosetting resin to reinforcing fibers in the mixture is preferably 10-75 parts by weight, but more preferably 25-70 parts by weight of glass fiber to 100 parts by weight of the uncured thermosetting resin. If the amount of glass fiber is less than 10 parts by weight, the mechanical strength of the obtained thermoplastic fiber-reinforced plastic is too low, and if it exceeds 75 parts by weight, the plastic surrounding the glass fiber is insufficient and gaps may occur.

In the mixture, if an organic solvent, reaction accelerator, coupling agent, pigment, wettability adjusting agent and antifoaming agent are added, the amount of these additives is preferably 10-100 parts by weight, 0.01-5 parts by weight, 0.1-5 parts by weight, 0.1-5 parts by weight, 0.1-5 parts by weight and 0.01-0.01 parts by weight relative to 100 parts by weight of the uncured thermosetting resin, respectively.

In the reaction step, a polymerization reaction takes place depending on the type of uncured thermosetting resin described above. If the mixture contains a volatile ingredient such as an organic solvent, it is preferable to perform the polymerization reaction after removing this volatile ingredient. Since the polymerization reaction takes place in the presence of the reinforcing fibers and desired additives, the reinforcing fibers and desired additives are distributed throughout the fiber-reinforced plastic having thermoplastic properties. Since it is a mixture of the thermosetting resin prior to polymerization and the reinforcing fibers which is polymerized, compared to the case where reinforcing fibers are added to thermoplastic resin having large molecular weight as in the prior art, adhesive properties at the interfaces between the plastic with thermoplastic properties and the reinforcing fibers are good, and the mechanical properties (shear strength, impact strength) of the product are superior.

The mixture obtained in the mixing step may be molded by injecting into a mold having a desired shape, or the product obtained after adjusting the viscosity by adding desired additives may first be laminated by the spray up or hand lay-up molding, and then be molded. The molded product can be manufactured by performing the reaction step after this procedure. In this case, since a mixture containing the thermoplastic resin prior to polymerization is used, molded products having various shapes, including molded products with fine or complex shapes, can easily be manufactured without defects.

In the thermoplastics obtained in the reaction step, the softening point at which the storage modulus (storage elastic modulus) (Pa) is 1/10 of the storage modulus (Pa) at 300 K is preferably between 310-450K, and at a temperature equal to or above the softening point, the storage modulus (Pa) is preferably 1/100 of the storage modulus (Pa) at 300 K or less.

In the thermoplastics obtained in the reaction step, the value of (E1-E2)/(T2-T1) when the storage moduli (Pa) at temperatures (K) T1 and T2 (T1<T2) below 450K are respectively E1 and E2, is preferably 1x10⁵-1x10¹⁰ (Pa/K).

Due to forming the aforesaid thermoplastics in the reaction step, in the vicinity of ordinary temperature (e.g., 20-90°C), a fiber-reinforced plastic having thermoplastic properties which shows equivalent mechanical properties to a fiber-reinforced resin (FRP) having a thermoplastic resin as matrix resin, which liquefies easily at high temperature (e.g., 100°C or more), and which permits forming, reuse and recycling, can be obtained. The storage modulus (Pa) is a value obtained by molding the thermoplastics which is the matrix resin of the fiber-reinforced thermoplastics into a sheet, and performing a viscoelasticity test (dual cantilever bending mode, frequency 1Hz).

### (EXAMPLES)

Hereafter, some examples of the invention will be described in detail, but the invention is not to be construed as being limited in any way thereby.

First, the number of parts by weight of the starting materials shown in Table 1 were mixed, and 31 parts by weight of methyl cellosolve was added as a solvent to lower the viscosity to prepare the mixture (mixing step). The obtained mixture did not undergo a polymerization reaction during preparation or storage at room temperature.

**(Table 1)**

| Starting Material Used | Chemical Type | Parts by weight |
|---|---|---|
| EPICLON HP-4032 | Dai Nippon Ink Chemical Industries naphthalene epoxy resin | 100 |
| BPA-M | Mitsui Chemicals bisphenol A | 16.7 |
| 1,6-DON | Sugai Chemicals 1,6-dihydroxynaphthalene | 45 |
| Paphen PKHP-200 | Tomoe Chemicals phenoxy resin | 50 |
| TPP-K | Hokko Chemicals tetraphenylphosphonium tetraphenylborate | 0.5 |
| ST86PA | Toray-/Dow Corning-Silicone antifoaming agent | 0.01 |
| Methyl cellosolve | Methyl cellosolve | 90 |

Next, a glass fiber textile (Glass Cloth, Nitto Boseki Ltd., WF230N, thickness: 0.22mm, mass: 203g/m², silane coupling agent-treated) as a reinforcing fiber was placed on a mold release paper, the aforesaid mixture heated to 40°C was passed over it, and it was cover-impregnated as thinly as possible by a rubber blade so that the glass fiber was completely wetted. Drying was performed in a hot air drying furnace at 100°C for about 20 minutes, the methyl cellosolve in the mixture was evaporated, and a prepreg comprising the unreacted reactive compounds (naphthalene epoxy resin, bisphenol A and 1,6-dihydroxynaphthalene) was thus obtained. Since the mixture contained reactive compounds, even after the methyl cellosolve solvent was vaporized, the viscosity of the mixture was lowered by heating and the glass fiber was easily impregnated.

After drying was complete, the prepreg was cut to 250mmx250mm, 12 sheets of the cut prepreg were superimposed and enclosed in film, contact heating was performed in a mold heated to 120°C for 5 minutes, the prepreg was taken out of the mold, and air was removed by a roller. The prepreg was again set in the mold, the mold temperature was raised to 160°C, press molding was performed slowly at a press pressure of 100kg/cm² for one hour to complete the polymerization reaction, and a molded fiber-reinforced thermoplastic resin was thereby obtained. Air bubbles were not observed on the surface or cross-section of the obtained molded product, and the surface appearance was good. The mixture was heated at 150-160°C for 1 hour to cause a polymerization reaction, and after the reaction shown by the following chemical equation, a linear polymer having no cross- linking structure was obtained.

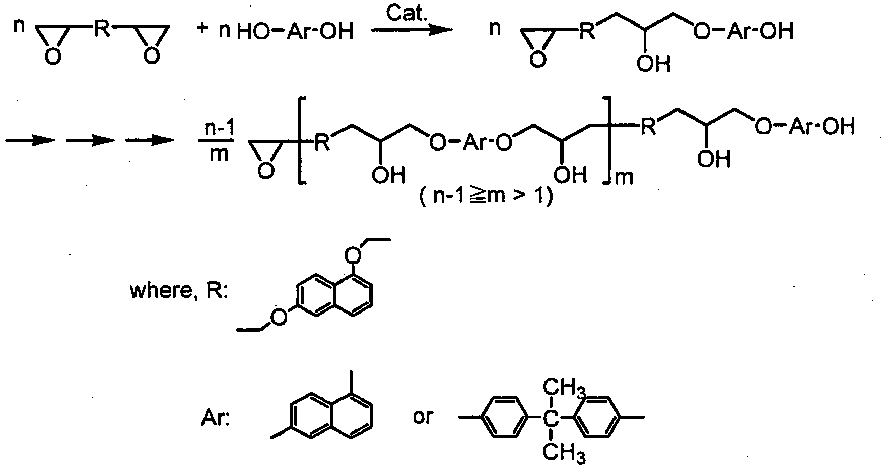

Next, the obtained fiber-reinforced plastic having thermoplastic properties (thereafter "heat melting FRP") molded product was compared with an ordinary FRP (FRP having a phenol novolak epoxy acrylate ester resin as parent material (hereafter "RefFRP")) as regards viscoelasticity and chemical resistance (weight change and thickness change in 10% sulfuric acid immersion test, and weight change and thickness change in 10% sodium hydroxide aqueous solution immersion test). The test methods were as follows.

### Viscoelasticity test

The measurement mode was dual cantilever bending, the frequency was 1Hz, and the measurement temperature was in the range of -40°C-160°C. The temperature dependence of storage modulus and tan δ were calculated.

### Chemical resistance

The acid resistance test solution was 10% sulfuric acid, the alkali resistance test solution was 10% sodium hydroxide aqueous solution, the test temperature was 25°C and the test piece size was 25mm x 25mm x 2.8mm. The weight change rate and thickness change rate after immersion in the above aqueous solutions were calculated.

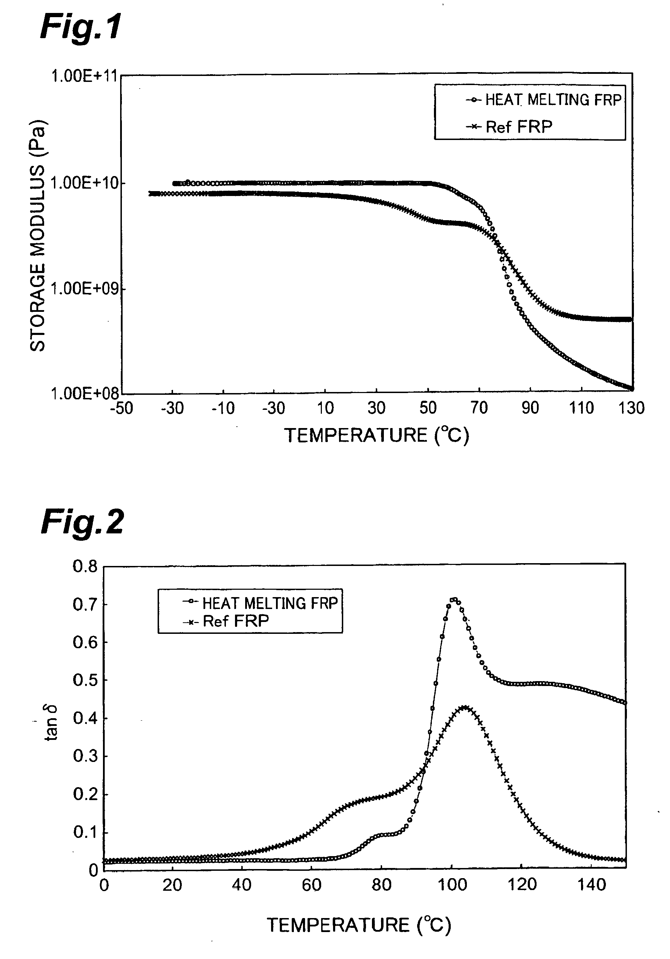

FIG 1 shows the measurement results for storage modulus, and FIG 2 shows the measurement results for tan 8. Regarding the storage modulus (E'), at a temperature equal to or less than the glass transition temperature (Tg, temperature of peak of tan δ), the heat melting FRP shows a slightly higher value than the RefFRP, and the temperature at which E' sharply decreases (approximately equivalent to Tg) is substantially identical.

From the result of the temperature dispersion of the loss (tan δ), in the case of RefFRP, as in the case of an ordinary thermosetting resin, tan δ increases sharply when reached Tg, but above Tg, it returns to the original low value. On the other hand, in the case of the heat melting FRP, tan δ increases sharply when reached Tg, and even at higher temperatures, despite a slight decrease, tan δ maintained a high value without returning to the original value. This shows that viscous properties of the heat melting FRP increase, and melting (re-liquefaction) of the heat melting FRP takes place at and above Tg of the parent material.

From the above, although in the vicinity of ordinary temperature (20-90°C), the heat melting FRP has equivalent mechanical properties to those of an ordinary FRP, in the high temperature region of 100°C and above, it liquefies easily, so that secondary treatment, reuse and recycling are possible.

From FIG 1, for the thermoplastic resin in the heat melting FRP, the softening point at which the storage modulus (Pa) is 1/10 of the storage modulus (Pa) at 300K is between 310-450K, and at a temperature equal to or above this softening point, the storage modulus (Pa) is 1/100 of the storage modulus (Pa) at 300 K or less. Further, for the thermoplastic resin in the heat melting FRP, the value of (E1-E2)/(T2-T1) when the storage moduli (Pa) at temperatures (K) T1 and T2 (T1<T2) below 450K are respectively E1 and E2, is within the range 1x10⁵-1x10¹⁰ (Pa/K).

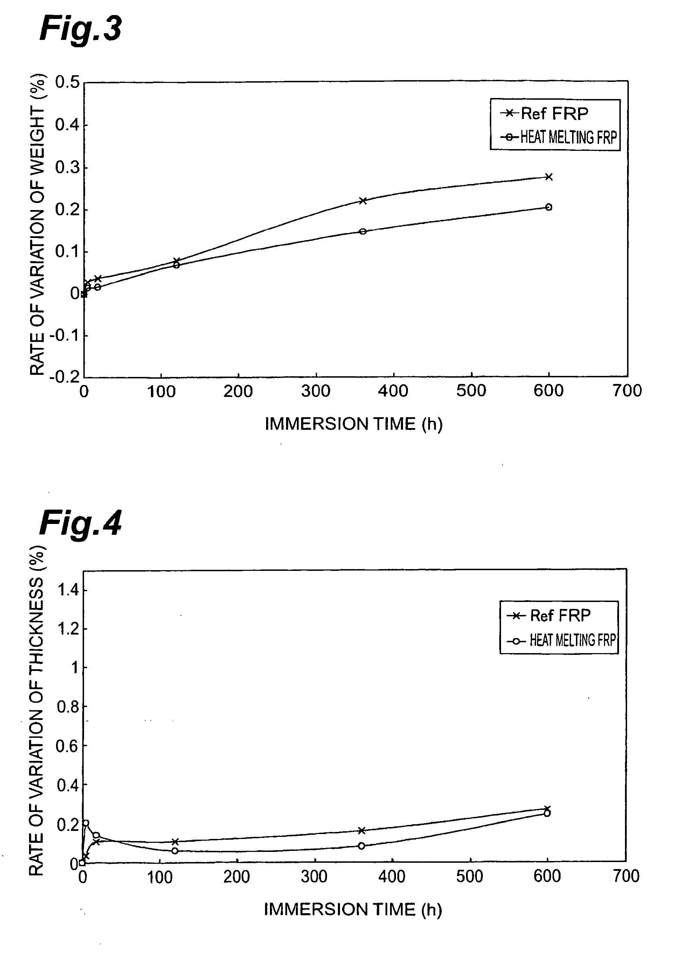

On the other hand, from FIG 3 and FIG 4, in the acid resistance test, the heat melting FRP showed slightly less variation than the RefFRP for both weight and thickness, but they both had substantially identical acid resistance.

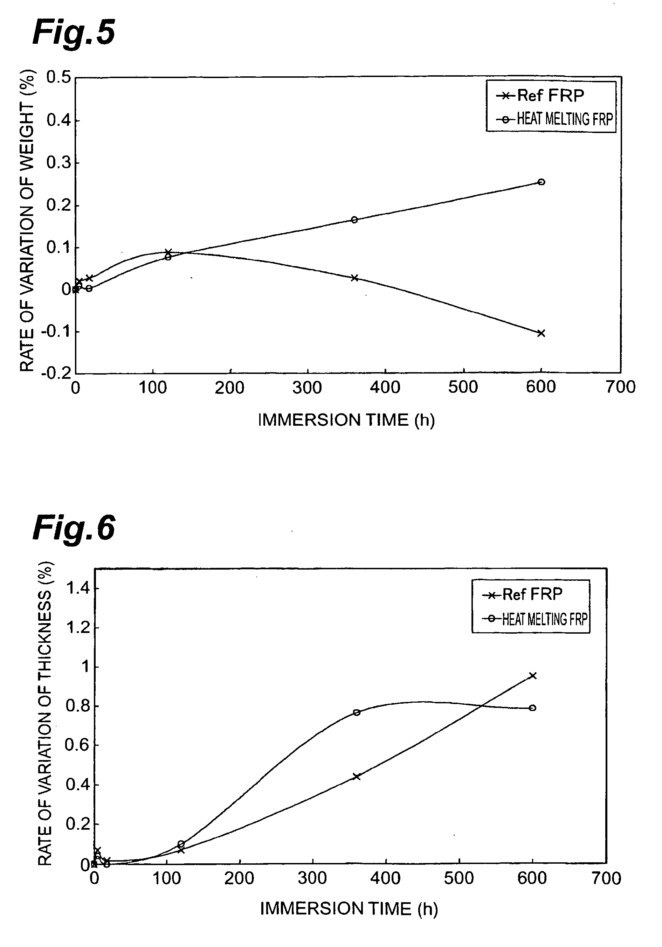

From FIG 5 and FIG 6, in the alkali resistance test, the RefFRP showed a weight increase from start of immersion to 100 hours, but thereafter the weight started to decrease. This is thought to be due to the fact that the molecular weight of the resin decreases due to hydrolysis of the ester bond in the presence of alkali, so that it dissolved in the immersion solution. On the other hand, with the heat melting FRP, the weight increased even after 600 hours from start of the test, the thickness increased up to about 400 hours after immersion, and thereafter it became constant. This is thought to be due to the fact that since the parent material of the heat melting FRP is a phenolic hardening epoxy resin, there is no ester bond in the skeleton, and so hydrolysis does not occur even under alkaline conditions.

From these results, it was clear that the heat melting FRP has an acid resistance equivalent to that of a vinyl ester general FRP, and that it has an alkali resistance superior to that of a vinyl ester general FRP.

As described hereinabove, therefore, the present invention provides a method of manufacturing a fiber-reinforced thermoplastics suitable for manufacturing molded products of various shapes including fine or complex shapes, which can suppress void at the interfaces between the thermoplastics and reinforcing fibers to a sufficient level.

## Claims

1. A method of manufacturing fiber-reinforced thermoplastics, comprising:
a mixing step for mixing an uncured thermosetting resin with reinforcing fibers to obtain a mixture; and
a reaction step for forming a thermoplastics by causing a polymerization reaction of the thermosetting resin in the mixture so that the thermosetting resin polymerizes,
wherein said uncured thermosetting resin comprises a first reactive compound and a second reactive compound, and said polymerization reaction is a polyaddition reaction between said first reactive compound and said second reactive compound, and
wherein said first reactive compounds is a bifunctional compound having two epoxy groups, and said second reactive compound is a bifunctional compound having two phenolic hydroxyl groups.

2. The method according to Claim 1, wherein said reinforcing fibers constitute a reinforcing fiber knitted web.

3. The method according to Claim 1 or 2, wherein said reinforcing fibers are glass fibers.

4. The method according to any of Claims 1-3, wherein, in the thermoplastics obtained in the reaction step, the softening point at which the storage modulus (Pa) is 1/10 of the storage modulus (Pa) at 300 K is between 310-450 K, and at a temperature equal to or above the softening point, the storage modulus (Pa) is 1/100 of the storage modulus (Pa) at 300 K or less.

5. The method according to any of Claims 1-4, wherein, in the thermoplastics obtained in the reaction step, the value of (E1-E2)/(T2-T1) when the storage moduli (Pa) at temperatures (K) T1 and T2 (T1<T2) below 450 K are respectively E1 and E2, is 1x10⁵-1x10¹⁰(Pa/K).

6. A fiber-reinforced thermoplastics obtainable according to the method described in any of Claims 1-5.

## Patentansprüche

1. Ein Verfahren zur Herstellung von faserverstärkten Thermoplasten, umfassend:
einen Mischschritt zum Mischen eines nicht gehärteten duroplastischen Harzes mit Verstärkungsfasern, um ein Gemisch zu erhalten; und
einen Reaktionsschritt zur Bildung eines Thermoplasten, indem eine Polymerisationsreaktion des duroplastischen Harzes in dem Gemisch verursacht wird, sodass das duroplastische Harz polymerisiert,
wobei das nicht gehärtete duroplastische Harz eine erste reaktive Verbindung und eine zweite reaktive Verbindung umfasst und die Polymerisationsreaktion eine Polyadditionsreaktion zwischen der ersten reaktiven Verbindung und der zweiten reaktiven Verbindung ist, und
wobei die erste reaktive Verbindung eine bifunktionelle Verbindung mit zwei Epoxidgruppen ist, und die zweite reaktive Verbindung eine bifunktionelle Verbindung mit zwei phenolischen Hydroxylgruppen ist.

2. Das Verfahren gemäß Anspruch 1, wobei die Verstärkungsfasern ein gestricktes Flächengebilde mit Verstärkungsfasern bilden.

3. Das Verfahren gemäß Anspruch 1 oder 2, wobei die Verstärkungsfasern Glasfasern sind.

4. Das Verfahren gemäß einem der Ansprüche 1 bis 3, wobei in den im Reaktionsschritt erhaltenen Thermoplasten, der Erweichungspunkt, bei dem das Speichermodul (Pa) 1/10 des Speichermoduls (Pa) bei 300 K beträgt, zwischen 310 - 450 K liegt, und bei einer Temperatur gleich oder über dem Erweichungspunkt, das Speichermodul (Pa) 1/100 des Speichermoduls (Pa) bei 300 K oder weniger beträgt.

5. Das Verfahren gemäß einem der Ansprüche 1 bis 4, wobei in den im Reaktionsschritt erhaltenen Thermoplasten, der Wert (E1-E2)/(T2-T1), wenn die Speichermodule (Pa) bei Temperaturen (K) T1 und T2 (T1<T2) unterhalb von 450 K jeweils E1 und E2 sind, 1x10⁵ - 1x10¹⁰ (Pa/K) beträgt.

6. Ein faserverstärkter Thermoplast, der gemäß dem in einem der Ansprüche 1 bis 5 beschriebenen Verfahren erhältlich ist.

## Revendications

1. Méthode de fabrication de thermoplastiques renforcés par des fibres, comprenant :
une étape de mélange pour mélanger une résine thermodurcissable non durcie avec des fibres de renforcement afin d'obtenir un mélange ; et
une étape de réaction pour former un thermoplastique en provoquant une réaction de polymérisation de la résine thermodurcissable dans le mélange de sorte que la résine thermodurcissable se polymérise,
dans laquelle ladite résine thermodurcissable non durcie comprend un premier composé réactif et un second composé réactif, et ladite réaction de polymérisation est une réaction de polyaddition entre ledit premier composé réactif et ledit second composé réactif, et
dans laquelle ledit premier composé réactif est un composé bifonctionnel ayant deux groupes époxy et ledit second composé réactif est un composé bifonctionnel ayant deux groupes hydroxyle phénoliques.

2. Méthode selon la revendication 1, dans laquelle lesdites fibres de renforcement constituent un réseau tricoté de fibres de renforcement.

3. Méthode selon la revendication 1 ou 2, dans laquelle lesdites fibres de renforcement sont des fibres de verre.

4. Méthode selon l'une quelconque des revendications 1 à 3, dans laquelle, dans les thermoplastiques obtenu dans l'étape de réaction, le point de ramollissement auquel le module de stockage (Pa) est de 1/10 du module de stockage (Pa) à 300 K est compris entre 310 et 450 K, et à une température supérieure ou égale au point de ramollissement, le module de stockage (Pa) est de 1/100 du module de stockage (Pa) à 300 K ou moins.

5. Méthode selon l'une quelconque des revendications 1 à 4, dans laquelle, dans les thermoplastiques obtenu dans l'étape de réaction, la valeur de (E1-E2)/(T2-T1) lorsque les modules de stockage (Pa) aux températures (K) T1 et T2 (T1<T2) inférieures à 450 K sont respectivement E1 et E2, est de 1x10⁵ à 1x10¹⁰ (Pa/K).

6. Thermoplastique renforcé par des fibres pouvant être obtenu selon la méthode décrite selon l'une quelconque des revendications 1 à 5.
